# EUROPEAN PATENT APPLICATION

(11) **EP 4 708 087 A1**
(43) Date of publication of application: **11.03.2026**
(21) Application number: 25199663.3
(22) Date of filing: 02.09.2025
(51) Int. Cl.: G06F 21/31, G06F 3/12, H04L 9/40, H04N 1/44

(54) **IMAGE FORMING APPARATUS**

(30) Priority: 10.09.2024 JP 2024157025
(71) Applicant: KYOCERA Document Solutions Inc., Osaka-shi, Osaka 540-8585 (JP)
(72) Inventor: TOBINAGA, Masayuki, Osaka-shi, Osaka, 540-8585 (JP)
(74) Representative: Herrero & Asociados, S.L.

(57) **Abstract**

An image forming apparatus (1) includes an operation device (47) receiving an input of an instruction from a user, and a controller (100) executing change of a password in response to a user instruction input from the operation device (47). The controller (100) causes a part of the functions of the image forming apparatus (1) to be in an unavailable state until change of an initial password is executed, and causes the functions, which are prohibited from being used until change of the initial password is executed, to be in a temporarily available state when the operation device (47) receives a predetermined special operation constituted of a combination of two or more operations.

## Description

### BACKGROUND

The present invention relates to an image forming apparatus, and relates to a technology of switching between approving or rejecting use of a function.

There are image forming apparatuses, such as copying machines and multifunction machines, having a function of switching between approving or rejecting use of functions on the basis of an input of a password. An initial password is set by a vendor before factory shipping.

Initial passwords are not passwords unique to equipment and are often common passwords. For this reason, for the sake of security measures, it is desirable for a user to promptly change the password after equipment has been adopted. For example, a technology of prompting a user to change an initial password is known.

### SUMMARY

Regarding an aspect of the present invention, a technology which is further improved compared with the foregoing technology is proposed. An image forming apparatus according to the aspect of the present invention includes an operation device and a controller. The operation device receives an input of an instruction from a user. The controller executes change of a password for authorizing use of a part of functions of the image forming apparatus in response to a user instruction input from the operation device. The controller causes a part of the functions to be in an unavailable state until at least change of an initial password is executed, and causes the functions, which are in an unavailable state until change of the initial password is executed, to be in a temporarily available state if the operation device receives a predetermined special operation constituted of a combination of two or more operations.

### BRIEF DESCRIPTION OF THE DRAWINGS

FIG. 1 is a functional block diagram schematically showing a main internal constitution of an image forming apparatus according to an embodiment of the present invention.
FIG. 2 is a flowchart showing an example of processing performed by a control device of the image forming apparatus.
FIGS. 3A and 3B are views showing examples of operation screens displayed by a display device.
FIG. 4 is a view showing an example of another operation screen displayed by the display device.

### DETAILED DESCRIPTION

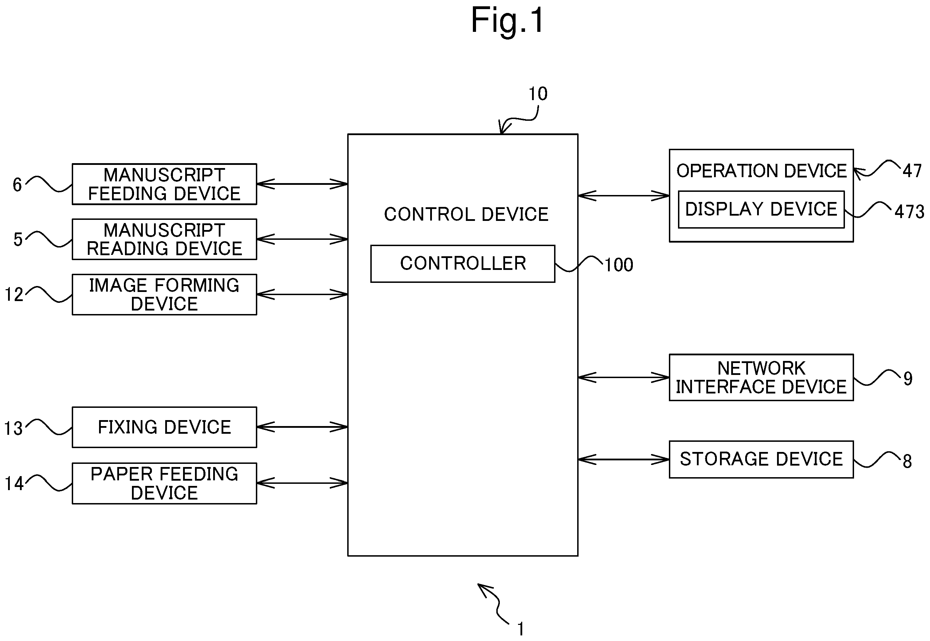

Hereinafter, an image forming apparatus according to an embodiment of the present invention will be described with reference to the drawings. FIG. 1 is a functional block diagram schematically showing a main internal constitution of the image forming apparatus according to the embodiment of the present invention. For example, an image forming apparatus 1 is a multifunction machine having a plurality of functions, such as a copying function, a printing function, a scanning function, and a facsimile function.

The image forming apparatus 1 is constituted to include a control device 10, a manuscript feeding device 6, a manuscript reading device 5, an image forming device 12, a fixing device 13, a paper feeding device 14, an operation device 47, a network interface device 9, and a storage device 8.

The manuscript feeding device 6 is constituted on an upper surface of the manuscript reading device 5 to be able to be opened and closed by a hinge or the like (not shown), and the manuscript feeding device 6 functions as a manuscript holding cover in a case where a manuscript placed on a platen glass (not shown) is read. In addition, the manuscript feeding device 6 is referred to as an auto document feeder (ADF), which includes a manuscript placement tray (not shown) and supplies a manuscript placed on the manuscript placement tray to the manuscript reading device 5.

The manuscript reading device 5 includes a scanner or the like, which reads a manuscript fed from the manuscript feeding device 6 or reads a manuscript placed on the platen glass. In addition, the manuscript reading device 5 can sequentially read a plurality of manuscript images sent from the manuscript feeding device 6.

A case where the image forming apparatus 1 performs a manuscript reading operation will be described. The manuscript reading device 5 optically reads a manuscript supplied to the manuscript reading device 5 by the manuscript feeding device 6 or an image of a manuscript placed on the foregoing platen glass, thereby generating image data. The image data generated by the manuscript reading device 5 is saved in an image memory or the like (not shown).

A case where the image forming apparatus 1 performs an image forming operation will be described. The image forming device 12 is a mechanism which includes a photoconductor drum for each color, a charging device, an exposure device, a developing device, and a primary transfer device and forms an image on a sheet of recording paper serving as a recording medium by secondary transfer via an intermediate transfer belt. In the image forming device 12, on the basis of image data generated by a manuscript reading operation, image data stored in the image memory or the like, image data received from a computer connected to a network, or the like, the image forming device 12 forms a toner image on a sheet of recording paper fed from the paper feeding device 14 and creates a printed matter.

The fixing device 13 is a fixing device which includes a heat roller, a pressure roller, and a drive mechanism for rotationally driving these, and heats and presses a sheet of recording paper on which a toner image has been formed by the image forming device 12 through a nip between the foregoing two rollers to fix the toner image to the recording paper. The recording paper subjected to fixing processing is discharged to a discharge tray (not shown).

The paper feeding device 14 includes a paper feeding cassette (not shown) and further includes a pick-up roller picking up a sheet of recording paper from the paper feeding cassette and feeding it to the image forming device 12, a conveyance roller, a conveyance path, and rotational drive mechanisms for the respective rollers.

The operation device 47 includes various hard keys operated by a user and receives an instruction such as an instruction for executing an image forming operation from the user in response to operations of the hard keys regarding various kinds of operation and processing which can be executed by the image forming apparatus 1.

The operation device 47 includes a display device 473 displaying an operation guide or the like for an operator. In addition, the operation device 47 receives an input of an instruction from a user based on a user's operation (touch operation) on a screen displayed by the display device 473 via a touch panel provided in the display device 473.

The display device 473 is constituted of a liquid crystal display (LCD) or the like. If an operator performs an operation of touching a button or a key displayed on the screen, the touch panel receives an instruction associated with the position of the touch operation. In this case, the touch panel functions as an operation device.

The network interface device 9 is a communication interface for transmitting and receiving various kinds of data with respect to an external device (for example, a personal computer) within a local area or on the Internet.

The storage device 8 is a large-capacity storage device such as a hard disk drive (HDD) or a solid state drive (SSD) and stores various control programs and the like.

The control device 10 is constituted to include a processor, a random access memory (RAM), a read only memory (ROM), and a dedicated hardware circuit. For example, the processor is a central processing unit (CPU), an application specific integrated circuit (ASIC), a micro-processing unit (MPU), or the like. The control device 10 includes a controller 100.

The control device 10 functions as the controller 100 by an operation of the foregoing processor in accordance with the control program or the like stored in the storage device 8. However, the controller 100 can also be constituted of individual hardware circuits without relying on operation according to the control program by the control device 10. Hereinafter, unless otherwise stated, the same applies to each embodiment.

The controller 100 is in charge of controlling overall operation of the image forming apparatus 1. The controller 100 is connected to the manuscript feeding device 6, the manuscript reading device 5, the image forming device 12, the fixing device 13, the paper feeding device 14, the operation device 47, the network interface device 9, and the storage device 8 and performs drive control or the like of each device to execute various kinds of processing and the like required for image formation by the image forming apparatus 1. For example, the controller 100 controls operation of the image forming device 12 to execute a copy job in which an image indicated by image data of a manuscript obtained through reading by the manuscript reading device 5 is formed in the recording medium.

The image forming apparatus 1 has a function of switching between approving or rejecting use of functions on the basis of an input of a password. The password required to approve use of functions is initially set by a vendor. In addition, the controller 100 executes change of the password in response to a user instruction input from the operation device 47.

In addition, the controller 100 causes a part of the functions of the image forming apparatus 1 to be in an unavailable state until at least change of the initial password is executed. For example, the controller 100 sets the image forming apparatus 1 to the following prohibition states A, B, and C by executing predetermined prohibition processing.

### <Prohibition state A>

The controller 100 approves the display device 473 to display an operation screen for changing the password and an operation screen for registering user information of an equipment administrator and prohibits the display device 473 from displaying other operation screens.

### <Prohibition state B>

The controller 100 does not receive any request from an external interface via the network interface device 9 or the like and does not receive any data.

### <Prohibition state C>

The controller 100 prohibits operation of engine units such as the image forming device 12 and the manuscript reading device 5.

When the operation device 47 has received a predetermined special operation constituted of a combination of two or more operations, the controller 100 sets the prohibited functions, which are set to an unavailable state until change of the initial password is executed, to a temporarily available state.

The foregoing special operation is, for example, (i) a combination of two or more hard key operations of the operation device 47, (ii) a combination of two or more touch operations on the touch panel of the operation device 47, (iii) a combination of a hard key operation and a touch operation, or the like. The touch operation may be a long press. The foregoing special operation is an operation which can be known only by a particular person on a manufacturer side and is an operation which is unknown to an end user.

When the foregoing prohibited functions are in a temporarily available state and the operation device 47 receives the foregoing special operation, the controller 100 executes the foregoing prohibition processing to set the image forming apparatus 1 to any of the foregoing prohibition states A, B, and C. Accordingly, the image forming apparatus 1 is canceled from the state where the foregoing prohibited functions are temporarily available.

In addition, the controller 100 sets the foregoing prohibited functions in a temporarily available state to an unavailable state when a power source of the image forming apparatus 1 is turned on from the off state. For example, the controller 100 sets the foregoing prohibited functions to an unavailable state every time the power source is turned on from the off state until change of the initial password is executed. Accordingly, even if the foregoing prohibited functions are in a temporarily available state before the power source is turned off, the foregoing prohibited functions are set to an unavailable state again after the power source is turned on.

In addition, in a case where the initial password has not been changed, the controller 100 causes the display device 473 to display a message prompting a user to change the initial password when the power source of the image forming apparatus 1 is turned on from the off state.

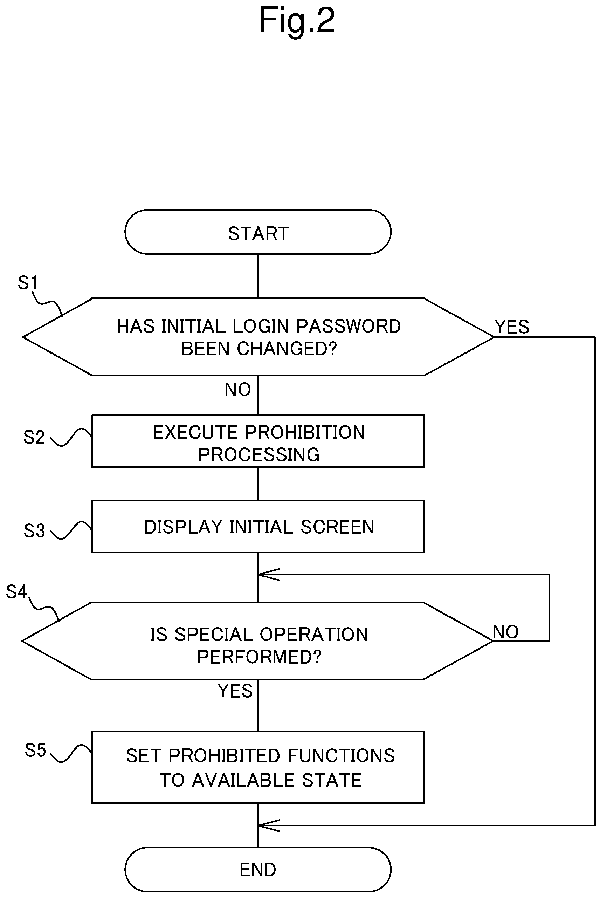

Next, an example of processing performed by the control device 10 in the image forming apparatus 1 will be described using the flowchart shown in FIG. 2. This processing is processing performed by the controller 100 when the power source of the image forming apparatus 1 is turned on from the off state.

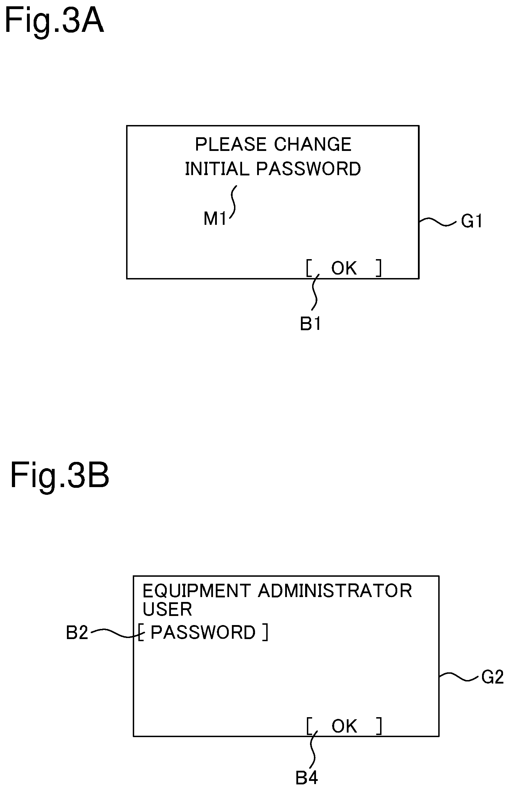

The controller 100 judges whether the initial password has been changed (S1). In a case where the controller 100 judges that the initial password has not been changed (NO in S1), the foregoing prohibition processing is executed, and the image forming apparatus 1 is set to any of the foregoing prohibition states A, B, and C (S2). Thereafter, the controller 100 causes the display device 473 to display an operation screen G1 as a predetermined initial screen as shown in the example in FIG. 3A (S3). Accordingly, a user is prompted to change the initial password.

The operation screen G1 shown in FIG. 3A displays a message M1 saying "PLEASE CHANGE INITIAL ADMINISTRATOR PASSWORD" and an operation button B1 marked with "OK". When the operation device 47 receives a screen transition instruction on the basis of a touch operation on the operation button B1, the controller 100 causes the display device 473 to display an operation screen G2 as a password change screen as shown in the example in FIG. 3B.

The operation screen G2 shown in FIG. 3B displays an operation button B2 marked with "PASSWORD" and an operation button B4 marked with "OK". The user changes the password via the operation screen G2.

When the operation device 47 receives an instruction for transition to a password input screen on the basis of touch operations on the operation buttons B2 and B4, the controller 100 causes the display device 473 to display an operation screen for receiving an input of the password from the user.

At the time of displaying the operation screen for receiving an input of the password from the user, when the password is input by the user operating the operation device 47, the controller 100 judges whether the input password matches the foregoing initial password which has been stored in advance. Further, when it is judged that the input password matches the foregoing initial password, the controller 100 causes the display device 473 to display a message prompting the user to input a new password different from the initial password. Here, when a new password is input by the user operating the operation device 47, the controller 100 stores the input new password in the storage device 8. The controller 100 stores a flag indicating that the initial password has been changed in a built-in memory (for example, a non-volatile memory).

When the new password is stored, the controller 100 causes the display device 473 to display a registration screen for receiving registration of user information (for example, the user ID, the email address, or the name) of the equipment administrator.

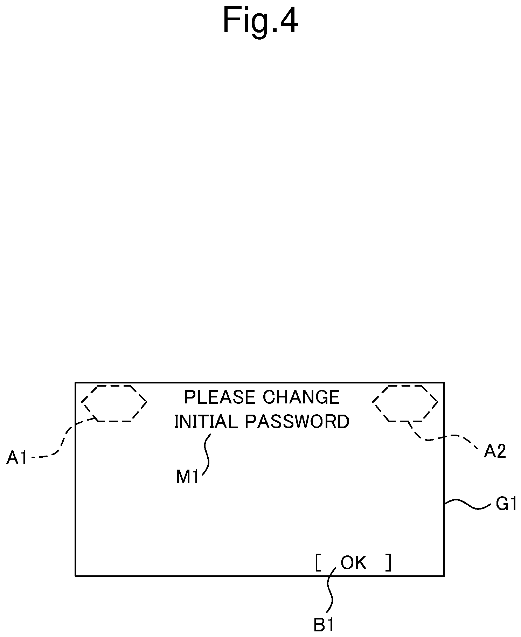

In addition, in a state where the display device 473 displays the operation screen G1 as the initial screen in S3, the controller 100 judges whether or not the operation device 47 has received the foregoing special operation (S4). For example, the foregoing special operation is touch operations (which may be performed simultaneously or with a time lag) or the like on two predetermined areas (areas A1 and A2) on the operation screen G1 as shown in the example in FIG. 4. For example, the area A1 is set on the upper left in the operation screen G1 in FIG. 4, and the area A2 is set on the upper right in the operation screen G1 in FIG. 4.

In a case where it is judged that the operation device 47 has received the foregoing special operation (YES in S4), the controller 100 sets the foregoing prohibited functions, which have been prohibited from being used, to an available state (S5). Accordingly, the user can normally operate the image forming apparatus 1. Thereafter, the processing ends. Meanwhile, in a case where it is judged that the operation device 47 has not received the foregoing special operation (NO in S4), the controller 100 repeats the processing of S4.

In addition, in S1, in a case where the controller 100 judges that the initial password has already been changed (YES in S1), the processing ends. This is because there is no need to set the functions of the image forming apparatus 1 to a prohibited state.

According to the foregoing embodiment, since a part of the functions of the image forming apparatus 1 is unavailable until change of the initial password is executed, the safety of the image forming apparatus 1 can be enhanced. In addition, if the foregoing special operation is performed, the foregoing prohibited functions, which have been prohibited from being used, is in a temporarily available state. Therefore, according to the foregoing embodiment, it is possible to achieve both improvement in safety of the equipment and improvement in work efficiency at a manufacturing site.

The foregoing embodiment has described a form in which the foregoing prohibition processing is not executed when the initial password has been changed. However, as another embodiment, in addition to change of the initial password, other requirements may further be added to the conditions for not executing the foregoing prohibition processing. For example, registration of user information of the equipment administrator or initial settings such as language settings may be added to the conditions for not executing the foregoing prohibition processing.

In addition, as still another embodiment, the controller 100 may cause the display device 473 to display a display screen indicating whether the functions of the image forming apparatus 1 are in an unavailable state or a temporarily available state. For example, the controller 100 causes a message indicating that the foregoing prohibited functions are in an available state to be displayed, causes an icon indicating this to be displayed, or changes the color of a part of an area of the display screen to a color different from the touch panel area.

For example, the safety of equipment can be enhanced simply by causing a part of the functions of the equipment to be unavailable until change of the password is executed after the equipment has been adopted. However, at a manufacturing site, settings, confirmation of operation, and the like cannot be performed using the functions unless the foregoing common password is input. In addition, at the time of delivering to a customer, since settings, confirmation of operation, and the like cannot be performed using the functions unless the password is changed at the site, there has been a desire to improve the work efficiency. However, according to the foregoing embodiment, it is possible to achieve both improvement in safety of the equipment and improvement in work efficiency at a manufacturing site.

The present invention is not limited to the constitutions of the foregoing embodiment, and various modifications can be made. In addition, in the foregoing embodiment, the constitutions and the processing described in the foregoing embodiment using FIGS. 1 to 4 are merely an embodiment of the present invention, and the present invention is not intended to be limited by the constitutions and the processing.

## Claims

1. An image forming apparatus (1) comprising:
an operation device (47) receiving an input of an instruction from a user; and
a controller (100) executing change of a password for authorizing use of a part of functions of the image forming apparatus (1) in response to a user instruction input from the operation device (47),
wherein the controller (100)
causes a part of the functions to be in an unavailable state until at least change of an initial password is executed, and
causes the function, which are in an unavailable state until change of the initial password is executed, to be in a temporarily available state if the operation device (47) receives a predetermined special operation constituted of a combination of two or more operations.

2. The image forming apparatus (1) according to claim 1,
wherein the controller (100) causes the functions in a temporarily available state to be in an unavailable state in a case where a power source of the image forming apparatus (1), of which the functions are in a temporarily available state, is turned off and the power source of the image forming apparatus (1) is turned on from the off state.

3. The image forming apparatus (1) according to claim 1,
wherein the controller (100) causes a part of the functions of the image forming apparatus (1) to be in an unavailable state in a case where the operation device (47) receives the special operation when the functions are in a temporarily available state.

4. The image forming apparatus (1) according to claim 1 further comprising:
a display device (473),
wherein the controller (100) causes the display device (473) to display a display screen indicating whether the functions are in an unavailable state or a temporarily available state.

5. The image forming apparatus (1) according to claim 4,
wherein the controller (100) causes the display device (473) to display a message prompting a user to change the initial password if a power source of the image forming apparatus (1) is turned on from the off state in a case where the initial password has not been changed.
